# EUROPEAN PATENT APPLICATION

(11) **EP 4 325 905 A1**
(43) Date of publication of application: **21.02.2024**
(21) Application number: 22190673.8
(22) Date of filing: 17.08.2022
(51) Int. Cl.: H04W 4/40, H04W 4/38, G06N 3/045, G06V 10/82

(54) **METHOD AND SYSTEM FOR EVALUATING A SUBJECT'S EXPERIENCE**

(71) Applicant: Continental Automotive Technologies GmbH, 30165 Hannover (DE)
(72) Inventor: Dhariwal, Shashank, 339780 Singapore (SG); Uniyal, Asmita, 339780 Singapore (SG); Singh, Nahar, 339780 Singapore (SG)
(74) Representative: Continental Corporation

(57) **Abstract**

A computer-implemented method and/or system for evaluating a subject's experience, the method comprising: receiving at least one sensor data from at least one sensor, the at least one sensor data generated by the at least one sensor; determining at least one first level feature based on the at least one sensor data; determining at least one second level feature based on the determined at least one first level feature; and determining a quantitative evaluation of the subject's experience based on the determined at least one second level feature.

## Description

### TECHNICAL FIELD

The invention relates to a computer-implemented method for evaluating a subject's experience, and more specifically, the invention relates to a computer-implemented method for evaluating a subject's experience and providing a quantitative evaluation.

### BACKGROUND

Evaluation of a person's experience is a generally subjective process, with the person reporting their experience and giving a rating. Such subjective experience rating is used in many industries, including the manufacturing, healthcare, and automotive industries. In particular, subjective experience rating is widely implemented in the sharing economy which involves peer-to-peer based activity of acquiring, providing, or sharing access to goods and services. The sharing economy relies heavily on consumers to provide ratings relating to their own experience as well as ratings of other consumers. For example, the ride-sharing industry has been built entirely on trust between strangers, with customer ratings being used as a sound indicator of satisfaction and safety of its peer-to-peer platform. Sharing economies thus urge consumers to take a leap of faith based on aggregated endorsement by other strangers.

Companies do not actively encourage honest feedback. For example, any rating lower than 5-stars may indicate an unhappy experience, such that a 4-star rating may be perceived as a black mark. A string of scores perceived to be "low" may even result in a user being suspended or permanently deactivated from a platform. Such practices do not consider that many factors influence the subjective experience rating provided, even factors that may be wholly unrelated to the experience. This rating system negatively impacts the trustworthiness of the platform due to the lack of transparency and validation in the rating and decision-making process.

Although existing systems exist to evaluate a person's experience, such evaluation systems only rely on factors such as facial expressions, body pose, sound analysis, and object detection. These factors are insufficient to evaluate human behaviour, which is the potential and expressed capacity (mentally, physically, and socially) to respond to internal and external stimuli. Therefore, the quantitative evaluation of existing systems is inadequate to give an accurate evaluation.

### SUMMARY

Embodiments of the present invention improve the evaluation of a subject's experience by evaluating additional important features or factors such as social traits, visual and/or verbal interactions between persons, cognitive load, physiological data, and environmental data, some of which may not be directly calculated simply based on sensor data but based on interactions between one or more other features or factors.

It shall be noted that all embodiments of the present invention concerning a method might be carried out with the order of the steps as described, nevertheless this does not have to be the only and essential order of the steps of the method. The herein presented methods may be carried out with another order of the disclosed steps without departing from the respective method embodiment, unless explicitly mentioned to the contrary hereinafter.

To solve the above technical problems, the present invention provides a computer-implemented method for evaluating a subject's experience, the method comprising:
receiving at least one sensor data from at least one sensor, the at least one sensor data generated by the at least one sensor;
determining at least one first level feature based on the at least one sensor data;
determining at least one second level feature based on the determined at least one first level feature; and
determining a quantitative evaluation of the subject's experience based on the determined at least one second level feature.

First level features are features that are determined using sensor data as direct input. Taken on their own, these first level features do not provide a holistic evaluation of human behaviour. The present invention accounts for complex or unseen interactions among first level features by determining at least one second level feature based on determined first level features. Such second level features allow the invention to account for additional factors representative of human behaviour such as the subject's personality and temperament for a more holistic and accurate evaluation. The invention also increases transparency within the current sharing economy rating system by using a data-driven quantitative approach which adds substance and objectiveness to the decision-making process, such that users may be more inclined to trust in the subsequent rating based on or validated by the quantitative evaluation process.

A preferred method of the present invention is a computer-implemented method as described above, wherein the at least one first level feature is determined based on the at least one sensor data using at least one first model, the at least one first model configured to receive at least one sensor data as input and to output a value representing each at least one first level feature.

The above-described aspect of the present invention has the advantage that using a model and preferably a neural network allows the learning and modelling of non-linear and complex relationships and subsequent application to new datasets or input. In addition, neural networks have the ability to learn by themselves and product an output that is not limited to the input provided.

A preferred method of the present invention is a computer-implemented method as described above or as described above as preferred, wherein the at least one first level feature is selected from the group comprising: subject profile, subject emotion, object location and label, subject pose, subject activity, subject mental fatigue, subject distraction, subject drowsiness, thermal comfort, and trip comfort.

The above-described aspect of the present invention has the advantage that these first level features can be determined based on direct sensor data input and are factors that contribute to a subject's experience. Furthermore, the first level features work conjunctively to account for human behaviour. For example, the first level feature of subject emotion may not be accurate for subjects who are not expressive, and thus other first level features such as subject distraction and subject mental fatigue may assist in understanding the subject's behaviour and experience.

A particularly preferred method of the present invention is a computer-implemented method as described above or as described above as preferred, wherein the subject is an occupant of a vehicle and wherein the at least one first level feature comprises trip comfort, wherein trip comfort is determined based on at least one sensor data comprising vehicle data and/or environmental data, preferably using a first model, the first model configured to receive at least one sensor data comprising vehicle data and/or environmental data as input and to output a value representing trip comfort, wherein the first model is more preferably is a neural network with a recurrent neural network (RNN) architecture and even more preferably has a long short-term memory (LSTM) or gated recurrent unit (GRU) architecture.

The above-described aspect of the present invention has the advantage that the invention can be adapted specifically for car or ride sharing platforms by monitoring and accounts for vehicle data and/or environmental data. Vehicle data and/or environmental data represent events occurring in and around a vehicle as such events also have an impact on a subject or occupant. For example, a long trip in a vehicle on a hot sunny day with the heating, ventilation, and air conditioning (HVAC) system, and infotainment system turned off may have a negative impact on the experience of the subject as the thermal comfort of the subject is affected. A recurrent neural network (RNN) is preferred as it can model time sequences or sequential information so that each pattern may be assumed to be dependent on previous records. Long short-term memory (LSTM) or gated recurrent unit (GRU) are even more preferred as they are capable of learning lengthy time period dependencies due to ability to maintain information in memory for long periods of time.

A particularly preferred method of the present invention is a computer-implemented method as described above or as described above as preferred or described above as particularly preferred wherein the at least one first level feature is determined more than once or in constant time intervals or continuously and wherein the at least one second level feature is determined upon detection of a change in the accordingly determined at least one first level feature, wherein detecting a change in the determined at least one first level feature preferably comprises:
assigning a weight to each of the determined at least one first level feature based on predefined rules, wherein the predefined rules are more preferably based on whether the subject is a passenger or a driver of a vehicle;
determining a cumulative weight based on the assigned weight and corresponding value of the determined at least one first level feature;
monitoring the cumulative weight over a period of time; and
detecting a change in the determined at least one first level feature when the cumulative weight changes beyond a predefined threshold.

The above-described aspect of the present invention has the advantage that assignment of weight allows the filtering of events which could potentially impact the accuracy of the evaluation as not all first level features may be relevant or important for all subjects. In particular, the invention may account for the role of the subject, which would affect how each first level feature contributes to the overall evaluation of the subject's experience. For example, subject drowsiness and subject distraction may be undesirable in a driver of a vehicle as this would indicate dangerous driving. In addition, the above-described aspect of the present invention has the advantage that the invention only accounts for significant events, which are events which cause a change in behaviour or first level features of the subject. Considering only significant events ensures that appropriate weight is given to the significant events, and the impact of such significant events is not reduced or diluted due to consideration of all events. Furthermore, by only determining the second level features when a behaviour change or a change in first level features is detected, the overall computation cost is reduced.

A preferred method of the present invention is a computer-implemented method as described above or as described above as preferred, wherein the at least one second level feature is determined based on the at least one first level feature using at least one second model, the at least one second model configured to receive values corresponding to each determined at least one first level feature and to output a value representing each at least one second level feature.

The above-described aspect of the present invention has the advantage that using a model, and preferably a neural network allows the learning and modelling of non-linear and complex relationships and subsequent application to new datasets or input. In addition, neural networks have the ability to learn by themselves and product an output that is not limited to the input provided.

A particularly preferred method of the present invention is a computer-implemented method as described above or as described above as preferred or described above as particularly preferred, wherein the at least one second level feature is selected from the group comprising: a social trait, subject interaction, generic emotion, cognitive load, and subject comfort.

The above-described aspect of the present invention has the advantage that these second level features are complex features or factors that may contribute to a more holistic evaluation of a subject's overall experience.

A particularly preferred method of the present invention is a computer-implemented method as described above or as described above as preferred or described above as particularly preferred, wherein the at least one second level feature comprises a social trait, wherein social trait is determined based on the at least one determined first level feature comprising subject profile, subject emotion, subject pose and/or subject activity, preferably using a second model, the second model configured to receive values corresponding to the at least one determined first level feature comprising subject profile, subject emotion, subject pose and/or subject activity as input and to output a value representing a social trait, wherein the second model is more preferably a neural network, and even more preferably a multi-level fully-connected neural network (FCN).

The above-described aspect of the present invention has the advantage that the invention accounts for the social traits of each subject, which increases the accuracy of the evaluation as the attributes and characteristics of the particular subject is also accounted for. Social relationships manifest when we establish, reciprocate, or deepen relationships with one another in the physical world, and social traits contributing to the development of social relationships are important to provide quality experiences. A multi-level fully-connected neural network (FCN) is preferred as the multi-level FCN is structure agnostic and does not include any special assumptions to be made about the inputs, and therefore learns features from all combinations of the inputs.

A particularly preferred method of the present invention is a computer-implemented method as described above or as described above as preferred or described above as particularly preferred, wherein the at least one second level feature comprises subject interaction, wherein subject interaction is determined based on the at least one determined first level feature comprising subject profile, subject emotion, subject pose and/or subject activity, preferably using a second model, the second model configured to receive values corresponding to the at least one determined first level feature comprising subject profile, subject emotion, subject pose and/or subject activity as input and to output a value representing a quality of interaction of the subject with objects and/or other subjects, wherein the second model is more preferably a neural network with a recurrent neural network (RNN) architecture, and even more preferably has a long short-term memory (LSTM) architecture.

The above-described aspect of the present invention has the advantage that the invention accounts for human activity such as subject individual activity and/or interaction between subjects, whether good or bad. This allows the analysis of human-to-human interaction along with individual activities. A recurrent neural network (RNN) is preferred as it can model time sequences or sequential information so that each pattern may be assumed to be dependent on previous records. Long short-term memory (LSTM) is even more preferred as it is capable of learning lengthy time period dependencies due to ability to maintain information in memory for long periods of time.

A particularly preferred method of the present invention is a computer-implemented method as described above or as described above as preferred or described above as particularly preferred, wherein the at least one second level feature comprises generic emotion, wherein generic emotion is determined based on the at least one determined first level feature comprising subject profile and/or subject emotion, preferably using a second model, the second model configured to receive values corresponding to the at least one determined first level feature comprising subject profile and/or subject emotion as input and to output a value representing an emotional expression of the subject over a period of time, wherein the second model is more preferably a neural network with a recurrent neural network (RNN) architecture, and even more preferably has a long short-term memory (LSTM) architecture.

The above-described aspect of the present invention has the advantage that analysing generic emotions allows the invention accounts for emotional expressions of the subject captured over a period of time which contributes to the subject's experience. Humans generally express emotions as a response to stimuli. Analysis of generic emotion information thus allows the analysis of emotions over a period of time and allows certain impulse reactions to be skipped, which would give a better overview of a subject's overall experience. A recurrent neural network (RNN) is preferred as it can model time sequences or sequential information so that each pattern may be assumed to be dependent on previous records. Long short-term memory (LSTM) is even more preferred as it is capable of learning lengthy time period dependencies due to ability to maintain information in memory for long periods of time.

A particularly preferred method of the present invention is a computer-implemented method as described above or as described above as preferred or described above as particularly preferred, wherein the at least one second level feature comprises cognitive load, wherein cognitive load is determined based on the at least one determined first level feature comprising subject profile, subject mental fatigue, subject distraction and/or subject drowsiness, preferably using a second model, the second model configured to receive values corresponding to the at least one determined first level feature comprising subject profile, subject mental fatigue, subject distraction and/or subject drowsiness as input and to output a value representing a cognitive load of the subject, wherein the second model is more preferably a neural network with a recurrent neural network (RNN) architecture, and even more preferably has a long short-term memory (LSTM) architecture.

The above-described aspect of the present invention has the advantage that the invention accounts for cognitive load of the subject which contributes to the subject's experience. Several complex tasks involve a wide range of cognitive skills, multisensory perception, and motor abilities. Cognitive impairment, in its varying degrees, is an important factor that can affect the subject's ability to carry out certain activities, such as driving a vehicle or operating a machine. A recurrent neural network (RNN) is preferred as it can model time sequences or sequential information so that each pattern may be assumed to be dependent on previous records. Long short-term memory (LSTM) is even more preferred as it is capable of learning lengthy time period dependencies due to ability to maintain information in memory for long periods of time.

A particularly preferred method of the present invention is a computer-implemented method as described above or as described above as preferred or described above as particularly preferred, wherein the at least one second level feature comprises subject comfort, wherein subject comfort is determined based on the at least one determined first level feature comprising subject profile, thermal comfort, and/or trip comfort, preferably using a second model, the second model configured to receive values corresponding to the at least one determined first level feature comprising subject profile, thermal comfort, and/or trip comfort as input and to output a value representing a measure of subject comfort.

The above-described aspect of the present invention has the advantage that the invention accounts for the subject's overall comfort which contributes to the subject's experience. Both thermal comfort and trip comfort affect the overall subject comfort. Thermal comfort is important as the human body is usually relaxed when the environmental temperature is compatible. Similarly, the human mind is also at relative peace when the subject knows that the driving is safe, and the optimal route has been chosen. A recurrent neural network (RNN) is preferred as it can model time sequences or sequential information so that each pattern may be assumed to be dependent on previous records. Long short-term memory (LSTM) is even more preferred as it is capable of learning lengthy time period dependencies due to ability to maintain information in memory for long periods of time.

A preferred method of the present invention is a computer-implemented method as described above or as described above as preferred or described above as particularly preferred, wherein determining a quantitative evaluation of the subject's experience based on the determined at least one second level feature comprises or is done by:
using a probabilistic model to determine a value on a predefined scale representing the subject's experience, wherein the probabilistic model is preferably a trained neural network, the trained neural network configured to receive values corresponding to each determined second level feature and, optionally, an output from a subject database, as input and to output a value on a predefined scale representing the subject's experience, wherein the trained neural network is preferably a time-series based neural network, and more preferably has a recurrent neural network (RNN) architecture, and even more preferably has a long short-term memory (LSTM) or gated recurrent unit (GRU) architecture.

The above-described aspect of the present invention has the advantage that only the second level features which account for interactions between first level features are directly taken into account when quantifying the subject's experience which allows a holistic evaluation of human behaviour and would increase the overall accuracy of the evaluation. A time-series based neural network is advantageous as each sample is assumed to be dependent on previous ones. A recurrent neural network (RNN) is preferred as it can model time sequences or sequential information so that each pattern may be assumed to be dependent on previous records. Long short-term memory (LSTM) or gated recurrent unit (GRU) are even more preferred as they are capable of learning lengthy time period dependencies due to ability to maintain information in memory for long periods of time.

A preferred method of the present invention is a computer-implemented method as described above or as described above as preferred or described above as particularly preferred, further comprising:
calculating an overall rating of the subject's experience based on the determined quantitative evaluations recorded over a period of time, preferably using a score estimation algorithm, and more preferably a time-series based neural network; and
optionally, receiving a subject rating from the subject or from a second subject; and
optionally, validating the subject rating if a margin between the overall rating and the subject rating is lower than a predefined threshold, and/or sending a notification to a third party if a margin between the overall rating and the subject rating is higher than a predefined threshold.

The above-described of the present invention has the advantage that the overall rating is representative of the subject's overall experience and the comparison carried out between the objective quantitative evaluation rating and the subject's subjective evaluation would determine if the quantitative evaluation result corresponds with the subject's subjective experience, as well as ensure that the subject's subjective evaluation is supported by or corresponds with the quantitative evaluation rating, thus allowing justification when dealing with complaints and feedback. In addition, in the sharing economy where ratings are often used as a signal of quality, this would lead to an increase in trust in the ratings provided as users would be assured that the subjective ratings provided by other users had been validated using a data-driven, objective, quantitative evaluation. A time-series based neural network is advantageous as each sample is assumed to be dependent on previous ones.

A preferred method of the present invention is a computer-implemented method as described above or as described above as preferred or described above as particularly preferred, further comprising generating one or more alerts based on the determined second level feature and/or the generated quantitative evaluation and/or the calculated overall rating.

The above-described aspect of the present invention has the advantage that the at least one second level feature, the results of the quantitative evaluation and/or the calculated overall rating may be used to generate alerts such as feedback, corrective actions, or warnings. This allows alerts to be generated that is specific to any determined second level feature and/or subject to allow intervention. For example, where the subject is a driver, feedback such as an alert may be generated when the determined second level feature of subject interaction indicates that the subject was interacting with the infotainment system for more than 5 seconds, such alert facilitating timely intervention to ensure safety. In another example, where the subject is a passenger, an alert to the driver may be generated when the determined second level feature of subject comfort is below a certain threshold, for example informing the subject to adjust the ventilation or air-conditioning. In another example, where the subject is an occupant in a medical device, an alert may be generated when the second level feature of subject comfort indicates that the subject is uncomfortable. In yet another example, where the subject is a driver, an alert recommending corrective action such as driver training may be generated when the generated quantitative evaluation or overall rating is low.

The above-described advantageous aspects of a computer-implemented method of the invention also hold for all aspects of a below-described system of the invention. All below-described advantageous aspects of a system of the invention also hold for all aspects of an above-described computer-implemented method of the invention.

The invention also relates to a system comprising one or more sensors, one or more processors and a memory that stores executable instructions for execution by the one or more processors, the executable instructions comprising instructions for performing a computer-implemented method according to the invention, wherein the system is preferably suitable for implementation into a vehicle cabin and/or comprises a vehicle.

The above-described advantageous aspects of a computer-implemented method or a system of the invention also hold for all aspects of a below-described computer program, machine-readable storage medium or data carrier signal of the invention. All below-described advantageous aspects of a computer program, machine-readable storage medium or data carrier signal of the invention also hold for all aspects of an above-described computer-implemented method or a system of the invention.

The invention also relates to a computer program, a machine-readable storage medium, or a data carrier signal that comprises instructions, that upon execution on a data processing device and/or control unit, cause the data processing device and/or control unit to perform the steps of a computer-implemented method according to the invention. The computer program may be an entire program by itself or may be part of or an element of a computer program. For example, the computer program may be a computer program element used to update an already existing computer program to get to the present invention. The machine-readable storage medium may be any storage medium, such as for example, a USB stick, a CD, a DVD, a data storage device, a hard disk, or any other medium on which a program element as described above can be stored.

As used in this summary, in the description below, in the claims below, and in the accompanying drawings, the term "sensor" includes any sensor that detects or responds to some type of input from the physical environment.

As used in this summary, in the description below, in the claims below, and in the accompanying drawings, the term "sensor data" means the output or data of a device, also known as a sensor, that detects and responds to some type of input from the physical environment.

As used in the summary, in the description below, in the claims below, and in the accompanying drawings, the term "first level feature" means a feature that is determined based on sensor data as input.

As used in the summary, in the description below, in the claims below, and in the accompanying drawings, the term "second level feature" means a feature that is determined based on one or more first level feature as input and does not use sensor data as a direct input.

As used in this summary, in the description below, in the claims below, and in the accompanying drawings, the term "vehicle" may refer to a car, truck, bus, train or any other crafts for the transport of humans.

### BRIEF DESCRIPTION OF THE DRAWINGS

These and other features, aspects, and advantages will become better understood with regard to the following description, appended claims, and accompanying drawings where:
Fig. 1 illustrates a computer-implemented method for evaluating a subject's experience, in accordance with embodiments of the present disclosure;
Fig. 2 illustrates a block diagram example of the computer-implemented method for evaluating a subject's experience, in accordance with embodiments of the present disclosure; and
Fig. 3 illustrates a method of determining a change in the determined at least one first level feature, in accordance with embodiments of the present disclosure.

In the drawings, like parts are denoted by like reference numerals.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in machine-readable medium and executed by a computer or processor, whether or not such computer or processor is explicitly shown.

### DETAILED DESCRIPTION

In the summary above, in this description, in the claims below, and in the accompanying drawings, reference is made to particular features (including method steps) of the invention. It is to be understood that the disclosure of the invention in this specification includes all possible combinations of such particular features. For example, where a particular feature is disclosed in the context of a particular aspect or embodiment of the invention, or a particular claim, that feature can also be used, to the extent possible, in combination with and/or in the context of other particular aspects and embodiments of the invention, and in the inventions generally.

In the present document, the word "exemplary" is used herein to mean "serving as an example, instance, or illustration." Any embodiment or implementation of the present subject matter described herein as "exemplary" is not necessarily be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the forms disclosed, but on the contrary, the disclosure is to cover all modifications, equivalents, and alternative falling within the scope of the disclosure.

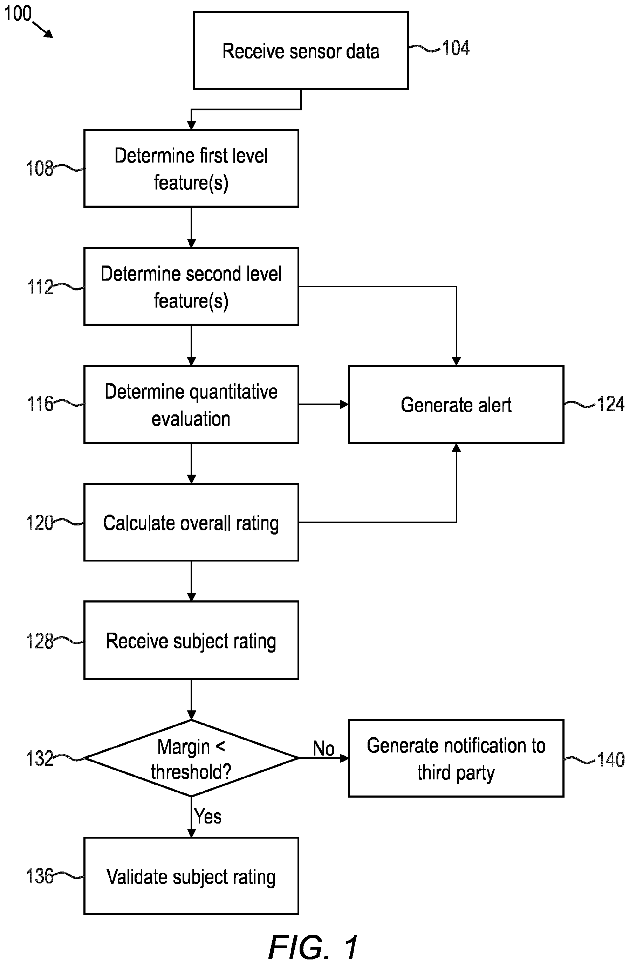

Fig. 1 illustrates a computer-implemented method 100 for evaluating a subject's experience, in accordance with embodiments of the present disclosure. Method 100 for evaluating a subject's experience may commence at step 104, wherein at least one sensor data is received from at least one sensor. In some embodiments, the at least one sensor may include any sensor that detects or responds to some type of input or stimulus from the physical environment, such as, for example and without limitation, imaging sensors (e.g., camera or video camera) for capturing digital images of the subject and the space surrounding the subject, audio sensors (e.g., microphone) for capturing sounds from and around the subject, location sensors (e.g., Global Positioning System (GPS)) for determining the location (e.g., in terms of latitude and longitude) of the subject or the space that the subject is occupying, speed/velocity sensors for determining a speed at which the subject is moving (e.g., where the subject is in a moving vehicle), sun load sensors for determining the intensity of sunlight that the subject and the space that the subject is occupying is exposed to, physiological sensors for monitoring biological activity of the subject (e.g., heart rate, temperature, or blood pressure), situational data sensors (e.g., temperature sensors or air quality sensors) for detecting a space or situation around the subject, or some combination thereof. In some embodiments, where the subject is within a vehicle or in a vehicle cabin, the at least one sensor may further include environmental data sensors for detecting the environment outside the vehicle.

According to some embodiments of the present disclosure, method 100 may comprise step 108 wherein at least one first level feature is determined based on the at least one sensor data received in step 104. In some embodiments, the at least one first level feature may include subject profile, subject emotion, object location and label, subject pose, subject activity, subject mental fatigue, subject distraction, subject drowsiness, thermal comfort, or some combination thereof. In some embodiments, where the subject is an occupant in a vehicle, the at least one first level feature may further comprise trip comfort. The at least one first level feature may be determined based on at least one sensor data using any known machine learning methods, such as support vector machines, decision trees, ensemble models, k-nearest neighbour models, Bayesian networks, or other types of models including linear models and/or non-linear models. In some embodiments, the at least one first level feature may be determined based on the at least one sensor data using at least one first model, the at least one first model configured to receive at least one sensor data as input and to output a value representing each at least one first level feature. In some embodiments, the at least one first model may be a neural network. In some embodiments, the at least one first level feature may be stored on an event log.

According to some embodiments of the present disclosure, method 100 may comprise step 112 wherein at least one second level feature is determined based on the at least one first level feature determined in step 108. In some embodiments, the at least one second level feature may include a social trait, subject interaction, generic emotion, cognitive load, subject comfort, or some combination thereof. The at least one second level feature may be determined based on the at least one first level feature determined in step 108 using any known machine learning methods, such as support vector machines, decision trees, ensemble models, k-nearest neighbour models, Bayesian networks, or other types of models including linear models and/or non-linear models. In some embodiments, the at least one second level feature may be determined based on the at least one first level feature using at least one second model, the at least one second model configured to receive values corresponding to each determined at least one first level feature and to output a value representing each at least one second level feature. In some embodiments, the at least one model may be a neural network. In some embodiments, the at least one second level feature may be stored on an event log.

According to some embodiments of the present disclosure, method 100 may comprise step 116 wherein a quantitative evaluation of the subject's experience is determined based on the at least one second level feature determined in step 112. In some embodiments, the quantitative evaluation may be determined using a probabilistic model.

According to some embodiments of the present disclosure, method 100 may further comprise step 120 wherein an overall rating of the subject's experience is calculated based on the quantitative evaluation generated in step 116, the generated quantitative evaluation recorded over a period of time. The period of time may be any appropriate period of time required to measure the subject's overall experience. In some embodiments, where the subject is an occupant in a vehicle, the period of time may be the duration of time between the subject boarding and alighting the vehicle. In some embodiments, where the subject is an occupant in a room, the period of time may be the duration of time between the subject entering and exiting the room. In some embodiments, where the subject is an occupant in a medical device (e.g., a magnetic resonance imaging (MRI) or computerised tomography (CT) machine), the period of time may be the duration of time between the subject entering and exiting the medical device. In some embodiments of the present disclosure, the overall rating of the subject's experience may be calculated using a score estimation algorithm which is an iterative method for numerically determining the most probable overall rating of the subject's experience on a predefined scale. An example of a predefined scale may be from 0 to 5. It is contemplated that other predefined scales may be employed. In some embodiments, the score estimation algorithm may be a time-series based neural network. An example of a time-series based neural network is a recurrent neural network (RNN) with long short-term memory (LSTM) architecture.

According to some embodiments of the present disclosure, method 100 may optionally further comprise step 124 wherein one or more alerts are generated based on the at least one second level feature determined in step 112, the quantitative evaluation generated in step 116 and/or the overall rating calculated in step 120. This allows the generation of alerts that may be specific to any determined second level feature and/or subject to allow intervention. The alert generated may include warnings, feedback and/or corrective actions that may be provided to the subject, another subject, or to a third-party (e.g., service or healthcare provider). For example, where the subject is a driver of a vehicle and the second level features determined in step 112 indicate behaviour such as rash driving, feedback or warning may be provided to the subject to inform them of such behaviour. In another example, where the subject is a driver of a vehicle and the second level features determined in step 112 indicate that the subject has been interacting with the infotainment system for more than a predetermined period of time (e.g., more than 5 seconds), an alert may be generated with feedback or warning to the subject to keep their eyes on the road to ensure safety. This allows timely intervention for the safety of the occupant(s) in the vehicle. In another example, where the subject is an occupant in a medical device, feedback or warning may be provided to the healthcare provider if the second level features determined in step 112 indicate that the subject is uncomfortable or panicking. In another example, where the subject is a passenger of a vehicle, an alert to the driver may be generated when the determined second level feature of subject comfort is below a certain threshold, for example informing the driver to adjust the ventilation or air-conditioning. In another example, the second level features may also be used for automatic or automated corrective measures such as occupant safety features like adjusting the breaking and steering system in certain driving situations. In another example, where the quantitative evaluation generated in step 116 or the overall rating calculated in step 120 is below a predetermined threshold, feedback may be provided to a service provider for further action. In yet another example, where the second level features indicate that a subject may be in danger (e.g., generic emotion 258 is constantly determined to be fear or distress), an alert may be generated to a third party such as the service provider or the police.

According to some embodiments of the present disclosure, method 100 may optionally comprise step 128 wherein a subject rating is received from the subject and/or a second subject and optionally step 132 wherein a margin between the overall rating calculated in step 120 and subject rating received in step 128 is determined and measured against a predefined threshold. In some embodiments, where the margin between the overall rating and the subject rating is lower than a predefined threshold, the subject rating may be optionally validated in step 136. In some embodiments, where the margin between the overall rating and the subject rating is higher than a predefined threshold, a notification may optionally be sent to a third party such as a service provider in step 140 so that further action may be taken. For example, where the predefined threshold is 0.5 and the overall rating calculated in step 120 is 4.5, a subject rating of 4.2 would be validated as the margin between the subject rating and the overall rating is 0.3, which is lower than the predefined threshold of 0.5.

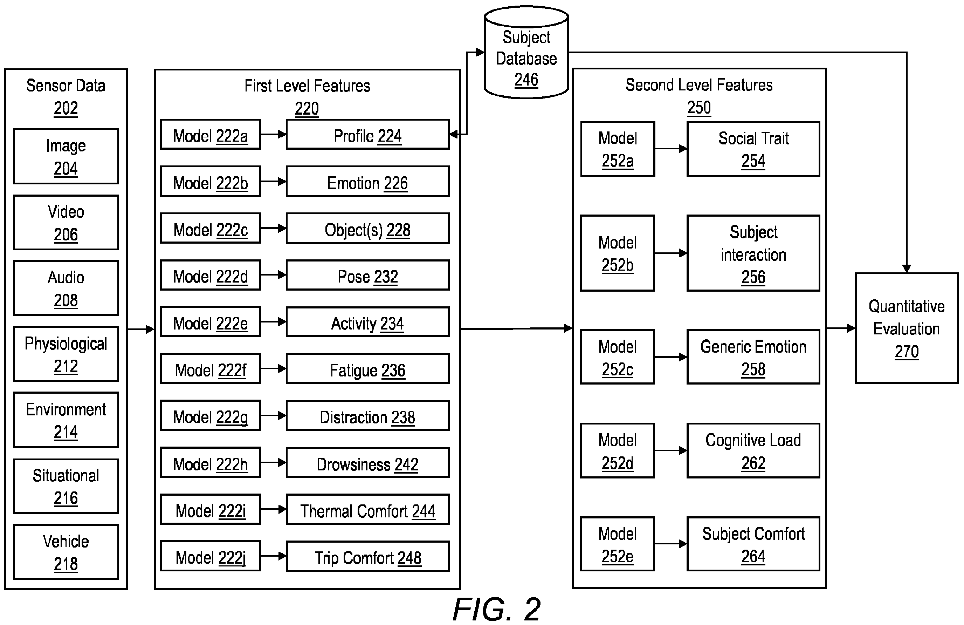

Fig. 2 illustrates a block diagram example of the computer-implemented method for evaluating a subject's experience, in accordance with embodiments of the present disclosure. According to some embodiments, sensor data 202 received from the at least one sensor may comprise image data 204, video data 206, audio data 208, physiological data 212, situational data 216, or some combination thereof. In some embodiments, wherein the subject is an occupant within a vehicle or in a vehicle cabin, the at least one sensor data 202 received from the at least one sensor may further comprise vehicle data 218, which may include vehicular temperature data, vehicular speed data, vehicular location data, or vehicular direction data, or some combination thereof.

According to some embodiments of the present disclosure, at least one first level feature 220 may be determined based on at least one of the received sensor data 202. In some embodiments, the at least one first level feature 220 may include subject profile 224, subject emotion 226, object location and label 228, subject pose 232, subject activity 234, subject mental fatigue 236, subject distraction 238, subject drowsiness 242, thermal comfort 244, or some combination thereof. In some embodiments, the at least one first level feature 220 may be determined based on at least one sensor data 202 using any known machine learning methods, such as support vector machines, decision trees, ensemble models, k-nearest neighbour models, Bayesian networks, or other types of models including linear models and/or non-linear models. In some embodiments, the at least one first level feature 220 may be determined based on the at least one sensor data 202 using at least one first model 222, the at least one first model 222 configured to receive at least one sensor data 202 as input and to output a value representing each at least one first level feature 220. In some embodiments, the type of first model 222 used may be determined based on the type of sensor data 202 received as input. In some embodiments, the first model 222 may be a recurrent neural network (RNN) with long short-term memory (LSTM) architecture where the sensor data 202 received as input is text-based. In some embodiments, the first model 222 may be a convolutional neural network (CNN) with residual neural network (ResNet) or inception network (Inception) architecture where the sensor data 202 received as input is image-based, such as image data 204 or video data 206. In some embodiments, the first model 222 may be a combination of CNN and RNN where the sensor data 202 received as input is audio-based, such as audio data 208.

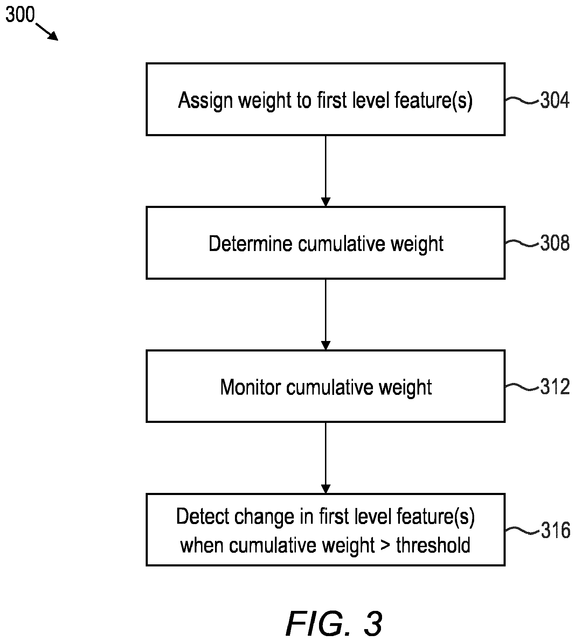

In some embodiments, the at least one first level feature 220 may comprise subject profile 224 which is an identity associated with the subject. In some embodiments, subject profile 224 may be retrieved from a subject database 246. In some embodiments, subject profile 224 may be created and stored on subject database 246. In some embodiments, face recognition may be carried out based on image data 204, and/or video data 206, or some combination thereof, using a first model 222a configured to receive at least one sensor data 202 comprising image data 204, and/or video data 206, or some combination thereof, as input and to output subject profile 224. In some embodiments, first model 222a may be a neural network with a CNN-based architecture, such as ResNet or InceptionV2. An example of ResNet may be found in "Deep Residual Learning for Image Recognition" by He *et. al*., wherein an example of the architecture of ResNet may be found at least in the right-most illustration of Fig. 3 and the column with the layer name 34-layer in Table 1 which illustrates a 34-layer residual network, and an example of the training of ResNet may be found at least at Section 3.4. An example of InceptionV2 may be found in "Rethinking the Inception Architecture for Computer Vision" by Szegedy *et. al*., wherein an example of the architecture of InceptionV2 may be found at least in Table 1, Figures 5 to 7, and Section 6, and an example of the training of InceptionV2 may be found at least at Section 8. It is contemplated that any other suitable architecture and/or training method may be employed. In some embodiments, first model 222a may be trained on a dataset comprising labelled images of clearly visible human faces. An example of a dataset that may be used to train first model 222a is the Labelled Faces in the Wild dataset available at http://vis-www.cs.umass.edu/lfw/ which is a database of face photographs comprising more than 13,000 images of faces collected from the web and labelled with the name of the person pictured. It is contemplated that any other suitable dataset may be used.

In some embodiments, the at least one first level feature 220 may comprise subject emotion 226 which includes one or more emotions that the subject is expressing. Examples of emotions include, but are not limited to, anger, disgust, fear, happiness, sadness, surprise, or some combination thereof. As an example, emotion recognition may be carried out based on image data 204, and/or audio data 208, or some combination thereof, using a first model 222b configured to receive at least one sensor data 202 comprising image data 204, video data 206, and/or audio data 208, or some combination thereof, as input and to output one or more subject emotion 226. In some embodiments, the first model 222b may extract vocal features such as volume and tone from audio data 208 which may be used to determine one or more subject emotion 226. In some embodiments, each of the one or more subject emotion 226 may comprise a rating on a predetermined scale, such as from 0 to 5. In some embodiments, first model 222b may have a CNN-based architecture, such as VGG16, ResNet or InceptionV2. An example of VGG16 may be found in "Very Deep Convolutional Networks for Large-Scale Image Recognition" by Simonyan and Zisserman, wherein an example of the architecture of VGG-16 may be found at least in Section 2.1 and column D of Table 1, and an example of the training of VGG-16 may be found at least in Section 3.1. It is contemplated that any other suitable architecture and/or training method may be employed. In some embodiments, first model 222b may be trained on a dataset comprising labelled images of clearly visible human faces expressing one or more emotions. An example of a dataset that may be used to train first model 222b is the AffectNet dataset available at http://mohammadmahoor.com/affectnet/ which is a database of facial expressions generated by collecting and annotating more than 1 million images from the internet. It is contemplated that any other suitable dataset may be used.

In some embodiments, the at least one first level feature 220 may comprise object location and label 228 which is the location and identity of objects within an image with a degree of confidence. As an example, object recognition, identification, locating and labelling may be carried out based on image data 204, and/or video data 206, or some combination thereof, using a first model 222c configured to receive at least one sensor data 202 comprising image data 204, and/or video data 206, or some combination thereof, as input and to output object location and label 228 and the confidence with which the object was detected. In some embodiments, first model 222c may have a CNN-based architecture, such as EfficientDet, You Only Look Once v3 (YOLOv3), Single Shot Detector (SSD), or Faster R-CNN. An example of EfficientDet may be found in "EfficientDet: Scalable and Efficient Object Detection" by Tan *et. al*., wherein an example of the architecture of EfficientDet may be found at least in Section 4.1, Figure 3, and Table 1 Row D0, and an example of the training of EfficientDet may be found at least in Section 5.1. The principles of YOLOv3 may be found in "YOLOv3: An Incremental Improvement" by Redmon and Farhadi, and an example of YOLOv3 may be found in "Vehicle Detection from Aerial Images Using Deep Learning: A Comparative Study" by Ammar *et. al*., wherein an example of the architecture of YOLOv3 may be found at least in Section 3.2.1 and Figure 2, and an example of the training of YOLOv3 may be found at least in Section 4.2. An example of SSD may be found in "SSD: Single Shot MultiBox Detector" by Liu *et. al*., wherein an example of the architecture of SSD may be found at least in Section 2.1 and Figure 2, and an example of training of SSD may be found at least in Section 2.2. An example of Faster R-CNN may be found in "Faster R-CNN: Towards Real-Time Object Detection with Region Proposal Networks" by Ren et. al., wherein an example of the architecture and training of Faster R-CNN may be found at least in Section 3. It is contemplated that any other suitable architecture and/or training method may be employed. In some embodiments, first model 222c may be trained on a dataset comprising labelled images containing common objects appearing in varying shapes, sizes, and orientations. A first example of a dataset that may be used to train first model 222c is the COCO dataset available at https://cocodataset.org/#home which is a large-scale object detection, segmentation, and captioning dataset and a second example of a dataset that may be used to train first model 222c is the CIFAR-10 or CIFAR-100 dataset available at http://www.cs.toronto.edu/~kriz/cifar.html which are labelled subsets of the 80 million tiny images dataset. It is contemplated that any other suitable dataset may be used.

In some embodiments, the at least one first level feature 220 may comprise subject pose 232 which is the size, location, and orientation of body parts of a subject. As an example, identification and locating of body parts of the subject may be carried out based on image data 204, and/or video data 206, or some combination thereof, using a first model 222d configured to receive at least one sensor data 202 comprising image data 204, and/or video data 206, or some combination thereof, as input and to output subject pose 232. In some embodiments, first model 222d may have a CNN-based architecture, such as High-Resolution Net (HRNet), DeepPose, or OpenPose. An example of HRNet may be found in "Deep High-Resolution Representation Learning for Visual Recognition" by Wang *et. al*., wherein an example of the architecture of HRNet V1 may be found at least in Section 3, Figures 2 and 3, and Appendix A, and an example of the training of HRNet V1 may be found at least in Section 4 subsection Training, and Appendices B and C. An example of DeepPose may be found in "DeepPose: Human Pose Estimation via Deep Neural Networks" by Toshev and Szegedy, wherein an example of the architecture of DeepPose may be found at least in Section 3 and Figure 2, and an example of the training of DeepPose may be found at least in Section 3. An example of OpenPose may be found in "OpenPose: Realtime Multi-Person 2D Pose Estimation using Part Affinity Fields" by Cao *et. al*., wherein an example of the architecture of OpenPose may be found at least in Section 3 and Figure 3, and an example of the training of OpenPose may be found at least in Section 3. It is contemplated that any other suitable architecture and/or training method may be employed. In some embodiments, first model 222d may be trained on a dataset comprising images containing human bodies appearing in varying poses and orientations. An first example of a dataset that may be used to train first model 222d is the DeepFashion2 dataset available at https://github.com/switchablenorms/DeepFashion2 which is a fashion dataset that comprises low level features for pose estimation, and a second example of a dataset that may be used to train first model 222d is the MPII human pose dataset available at https://paperswithcode.com/dataset/mpii-human-pose which is a dataset for human pose estimation consisting labelled images of human activities. It is contemplated that any other suitable dataset may be used.

In some embodiments, the at least one first level feature 220 may comprise subject activity 234 which is one or more activities carried out by the subject. Examples of human activity include, but are not limited to, talking, sleeping, eating, drinking, interacting with objects (e.g., infotainment system or mobile phone) or some combination thereof. As an example, recognition of human activities from a series of observations of the actions of the subject and other surrounding conditions may be carried out based on image data 204, and/or video data 206, or some combination thereof, using a first model 222e configured to receive at least one sensor data 202 comprising image data 204, and/or video data 206, or some combination thereof, as input and to output a label of subject activity 234. In some embodiments, first model 222e may have an RNN-based architecture, such as LSTM or DeepConvLSTM. An example of LSTM may be found in "Understanding LSTM - a tutorial into Long Short-Term Memory Recurrent Neural Networks" by Staudemeyer and Morris, wherein an example of the architecture of LSTM may be found at least in Section 8, and an example of the training of LSTM may be found at least in Section 9. An example of DeepConvLSTM may be found in "Deep ConvLSTM with self-attention for human activity decoding using wearable sensors" by Singh *et. al*., wherein an example of the architecture of DeepConvLSTM may be found at least in Section II and Figure 1, and an example of the training of the DeepConvLSTM may be found at least in Section IV. It is contemplated that any other suitable architecture and/or training method may be employed. In some embodiments, first model 222e may be trained on a dataset comprising images containing humans performing general activities like operating a phone, drinking, etc. An example of a dataset that may be used to train first model 222e is the AVA (Atomic Visual Actions) dataset available at https://paperswithcode.com/dataset/ava which is a dataset that provides audio-visual annotations of video for improving the understanding of human activity. It is contemplated that any other suitable dataset may be used.

In some embodiments, the at least one first level feature 220 may comprise subject mental fatigue 236 which is the subject's temporary inability to maintain optimal cognitive performance. As an example, estimation of the subject's ability to maintain optimal cognitive performance may be carried out based on image data 204, video data 206, audio data 208 (e.g., voice data), and/or physiological data 212 (e.g., heart and respiration rate), or some combination thereof, using a first model 222f configured to receive at least one sensor data 202 comprising image data 204, video data 206, audio data 208 (e.g., voice data), and/or physiological data 212 (e.g., heart and respiration rate) , or some combination thereof, as input and to output a numerical estimate of subject mental fatigue 236. In some embodiments, first model 222f receiving image data 204 and/or video data 206 as input may have a CNN-based architecture, such as EM-CNN. An example of EM-CNN may be found in "Joint Face Detection and Alignment using Multi-task Cascaded Convolutional Networks" by Zhang *et. al*., wherein an example of the architecture of EM-CNN may be found at least in Section II.A and II.B, and Figure 2, and an example of the training of EM-CNN may be found at least in Section II.C and III. It is contemplated that any other suitable architecture and/or training method may be employed. In some embodiments, first model 222f receiving audio data 208 as input may have an RNN-based architecture or TFCNN architecture. In some embodiments, first model 222f receiving physiological data 212 as input may have an RNN-based architecture, such as LSTM. In some embodiments, first model 222f may be trained on datasets comprising images containing human face, audio samples, numerical data from physiological sensors such as heart rate, respiratory rate, temperature, etc. An example of a dataset that may be used to train 222f is the FatigueSet dataset https://www.esense.io/datasets/fatigueset/ which is a dataset containing multimodal sensor data from four wearable sensors during controlled physical activity sessions. It is contemplated that any other suitable dataset may be used.

In some embodiments, the at least one first level feature 220 may comprise subject distraction 238 which is subject inattention and distraction. As an example, detection of subject inattention and distraction may be carried out based on image data 204, video data 206, and/or audio data 208 (e.g., voice data), or some combination thereof, using a first model 222g configured to receive at least one sensor data 202 comprising image data 204, video data 206, and/or audio data 208 (e.g., voice data), or some combination thereof, as input and to output a positive or negative indication for subject distraction 238. In some embodiments, first model 222g receiving image data 204 and/or video data 206 as input may have a CNN-based architecture, such as ResNet, InceptionV2, or CapsuleNet. An example of CapsuleNet may be found in "Dynamic Routing Between Capsules" by Sabour *et. al*., wherein an example of the architecture of CapsuleNet may be found at least in Section 4 and Figure 1, and an example of the training of CapsuleNet may be found at least in Section 4. It is contemplated that any other suitable architecture and/or training method may be employed. In some embodiments, the neural network receiving audio data 208 may have an RNN-based architecture or Time-Frequency Convolution Network (TFCNN)-based architecture. An example of LSTM may be found in "Understanding LSTM - a tutorial into Long Short-Term Memory Recurrent Neural Networks" by Staudemeyer and Morris, wherein an example of the architecture of RNN may be found at least in Section 5, and an example of the training of LSTM may be found at least in Section 6. An example of a TFCNN may be found in "Time-Frequency Convolutional Networks for Robust Speech Recognition" by Mitra and Franco, where an example of the architecture of TFCNN may be found at least in Section 4 and Figure 1, and an example of the training of TFCNN may be found at least in Section 5. It is contemplated that any other suitable architecture and/or training method may be employed. In some embodiments, first model 222g may be trained on a dataset comprising images containing human body and audio signals. An example of a dataset that may be used to train first model 222g is the Distracted Driver Dataset v2 available at https://heshameraqi.github.io/distraction_detection which is a dataset that comprises labelled data for distracted driver detection over multiple classes of distracted driving. It is contemplated that any other suitable dataset may be used.

In some embodiments, the at least one first level feature 220 may comprise subject drowsiness 242. As an example, detection of subject drowsiness may be carried out based on image data 204, and/or video data 206, or some combination thereof, using a first model 222h configured to receive at least one sensor data 202 comprising image data 204, and/or video data 206, or some combination thereof, as input and to output a positive or negative indication for subject drowsiness 242. In some embodiments, first model 222h may have a CNN-based architecture, such as ResNet, InceptionV2, or CapsuleNet. In some embodiments, first model 222h may be trained on a dataset comprising images containing images of clearly visible human faces. An example of a dataset that may be used to train first model 222h is the drowsiness dataset available at https://www.kaggle.com/datasets/dheerajperumandla/drowsiness-dataset which is a labelled dataset comprising images of humans with their mouths open and closed, as well as images of humans yawning and not yawning. It is contemplated that any other suitable dataset may be used.

In some embodiments, the at least one first level feature 220 may comprise thermal comfort 244 which is a condition of the mind that expresses satisfaction with the temperature of the surroundings. As an example, estimation of the subject's satisfaction with the temperature of the surroundings may be carried out based on image data 204, video data 206, situational data 216, and/or environmental data 214, or some combination thereof, using a first model 222i or any known machine learning method configured to receive at least one sensor data 202 comprising image data 204, video data 206, situational data 216, and/or environmental data 214, or some combination thereof, as input and to output a numerical estimate of subject thermal comfort 244. In some embodiments, first model 222i receiving image data 204 and/or video data 206 as input may have a CNN-based architecture, such as ResNet, InceptionV2, or CapsuleNet. In some embodiments, sensor data 202 expressed as numerical data may be processed using known machine learning techniques such as Random forest, gradient boosting, and personalised regression. In some embodiments, first model 222i may be trained on a dataset comprising data from various environmental and vehicle sensors as well as images of humans. A first example of a dataset that may be used to train first model 222i is the ASHRAE Global Thermal Comfort Database II available at https://www.kaggle.com/datasets/claytonmiller/ashrae-global-thermal-comfort-database-ii which is a dataset of rows of data of paired subjecting comfort votes and objective instrumental measurements of thermal comfort parameters, and a second example of a dataset that may be used to train first model 222i is the ASHRAE Global Database of Thermal Comfort Field Measurements dataset available at https://datadryad.org/stash/dataset/doi:10.6078/D1F671 which is a dataset also comprising rows of data of paired subjective comfort votes and objective instrumental measurements of thermal comfort parameters. It is contemplated that any other suitable dataset may be used.

In some embodiments where the subject is an occupant in a vehicle, the at least one first level feature 220 may comprise trip comfort 248 which is how comfortable a trip is for the subject. In some embodiments, evaluation of a trip with regard to navigation, driving style and/or pattern may be carried out based on vehicle data 218, and/or environmental data 214, or some combination thereof, using any known machine learning method configured to receive at least one sensor data 202 comprising vehicle data 218, and/or environmental data 214, or some combination thereof, as input and to output a value representing trip comfort 248. In some embodiments, machine learning methods such as Random forest, gradient boosting, or personalised regression may be used. In some embodiments, the machine learning model may be trained on a dataset comprising data from various environmental and vehicle sensors. Preferably, trip comfort 248 is determined using a first model 222j, the first model 222j configured to receive at least one sensor data 202 comprising vehicle data 218, and/or environmental data 214, or some combination thereof, as input and to output a value representing trip comfort 248. Preferably, the first model 222j may have an RNN-based architecture, and even more preferably, a LSTM or GRU architecture. An example of a GRU may be found in "Empirical Evaluation of Gated Recurrent Neural Networks on Sequence Modeling" by Chung *et. al*., wherein an example of the architecture of GRU may be found at least in Section 2 and 3.2, and an example of the training of GRU may be found at least in Section 4.2. It is contemplated that any other suitable architecture and/or training method may be employed. In some embodiments, the first model 222j may be trained on a data set comprising data from various environmental and vehicle sensors. An example of a dataset that may be used to train first model 222j is the Audi Autonomous Driving Dataset (A2D2) available at https://www.a2d2.audi/a2d2/en.html, in particular the vehicle bus data of the A2D2 dataset. It is contemplated that any other suitable dataset may be used.

According to some embodiments of the present disclosure, at least one second level feature 250 may be determined based on at least one first level feature 220. In some embodiments, the at least one second level feature 250 may be determined based on the at least one first level feature 220 using at least one second model 252, the at least one second model 252 configured to receive values corresponding to each determined at least one first level feature 220 and to output a value representing each at least one second level feature 250. In some embodiments, the at least one second level feature 250 may be determined based on at least one first level feature 220 using any known machine learning methods, such as support vector machines (SVM), decision trees, ensemble models, k-nearest neighbour models, Bayesian networks, or other types of models including linear models and/or non-linear models. In some embodiments, the type of second model 252 used may be a multimodal neural network based subject behaviour modelling system. In some embodiments, when training the at least one second model 252, an initial dataset may first be processed by the at least one first model 222 to generate a dataset comprising values corresponding to one or more first level features 220, with the dataset comprising values corresponding to one or more first level features 220 being the input dataset used to train the at least one second model 252. In some embodiments, the at least one second level feature 250 may include a social trait 254, subject interaction 256, generic emotion 258, cognitive load 262, and subject comfort 264.

According to some embodiments of the present disclosure, the at least one second level feature 250 may comprise one or more social traits 254. Social traits are the attitudes that a subject may in their relationships with other persons. Social relations manifest when we establish, reciprocate, or deepen relationships with each other in the physical world, and social traits are indicators of the social connections that we have with others. Examples of social traits include, but are not limited to, friendliness, assuring, trustworthiness, warmth, dominance, or some combination thereof. In some embodiments, social trait 254 may be determined using a second model 252a. In some embodiments, second model 252a may be based on any known machine learning method configured to receive values corresponding to the at least one determined first level feature 220 comprising subject profile 224, subject emotion 226, subject pose 232, and/or subject activity 234, or some combination thereof, as input and to output a value representing a social trait 254. Examples of known machine learning methods include SVM and decision trees. In some embodiments, second model 252a may be a neural network. In some embodiments, second model 252a may be a neural network employed together with other machine learning methods. In some embodiments, second model 252a may be a multi-level fully-connected neural network (FCN) comprising a series of fully connected layers that connect every neuron in one layer to every neuron in the other layer. An example of an FCN-VGG-16 may be found in "Fully Convolutional Networks for Semantic Segmentation" by Long *et. al*., wherein an example of the architecture of FCN may be found at least in Section 3 and Figure 2, an example of training of FCN may be found at least in Section 4.3. It is contemplated that any other suitable architecture and/or training method may be employed.

In some embodiments, second model 252a may be trained on a dataset comprising labelled data with social traits defined based on the inputs from subject profile 224, subject emotion 226, subject pose 232, and/or subject activity 234, or some combination thereof, wherein the labelled data will each have ratings for each social trait. In some embodiments, the rating for each social trait may be a value between 0 (minimum) to +5 (maximum). In some embodiments, the input dataset used to train second model 252a may be generated by processing an initial dataset with first model 222a, 222b, 222d, and/or 222e, or some combination thereof, to generate the input dataset comprising values corresponding to subject profile 224, subject emotion 226, subject pose 232, and/or subject activity 234, or some combination thereof. An example of an initial dataset that may be used is the social relation dataset available at https://paperswithcode.com/dataset/social-relation-dataset which is a dataset for social trait prediction from face images comprising labelled images of faces and their pairwise relations. It is contemplated that any other suitable dataset may be used as the initial dataset.

According to some embodiments of the present disclosure, the at least one second level feature 250 may comprise subject interaction 256 which is interaction that the subject may have with other subjects, or any interaction that the subject may have with objects (i.e., individual activity). For example, subject interaction 256 may include the subject interacting with another subject (e.g., conversing), or the subject interacting with an object (e.g., an infotainment system, or a handphone). Such subject interactions are important for the analysis of human-to-human interaction or human-to-object interactions that may affect a subject's experience. In some embodiments, subject interaction 256 may be determined using a second model 252b. In some embodiments, second model 252b may be based on any known machine learning method configured to receive values corresponding to the at least one determined first level feature 220 comprising subject profile 224, subject emotion 226, subject pose 232, and/or subject activity 234, or some combination thereof, as input and to output a value representing a quality of subject interaction. In some embodiments, the value representing a quality of subject interaction may be positive or negative, with a positive value representing a positive subject interaction and a negative value representing a negative subject interaction. Examples of known machine learning methods include Random forest, gradient boosting, personalised regression. In some embodiments, second model 252b may be a neural network. In some embodiments, second model 252b may be a neural network employed together with other machine learning methods. In some embodiments, second model 252b may have an RNN-based architecture, and more preferably, a LSTM architecture.

In some embodiments, the second model 252b may be trained on a dataset comprising labelled data with subject interactions rated on a predefined scale. In some embodiments, the predefined scale may range from -5 (most negative) to +5 (most positive). In some embodiments, the input dataset used to train second model 252b may be generated by processing an initial dataset with first model 222a, 222b, 222d, and/or 222e, or some combination thereof, to generate the input dataset comprising values corresponding to subject profile 224, subject emotion 226, subject pose 232, and/or subject activity 234, or some combination thereof. An first example of an initial dataset that may be used is the NTU RGB+D dataset available at https://paperswithcode.com/dataset/ntu-rgb-d which is a dataset for RGB-D human action recognition with labelled actions, and a second example of an initial dataset that may be used is the H²O Human-to-Human-or-Object Interaction dataset available at https://kalisteo.cea.fr/wp-content/uploads/2021/12/README_H2O.html which is a dataset comprising annotated images which contain human-to-object and human-to-human interactions. It is contemplated that any other suitable dataset may be used as the initial dataset.

According to some embodiments of the present disclosure, the at least one second level feature 250 may comprise generic emotion 258 which is emotion of a subject recorded over a period of time. Examples of such emotion may include emotional expressions such as anger, disgust, fear, happiness, sadness, surprise, or some combination thereof. Humans generally express emotions as a response to stimuli. Analysis of generic emotion information thus allows the analysis of emotions over a period of time and allows certain impulse reactions to be skipped, which would give a better overview of a subject's overall experience. In some embodiments, generic emotion 258 may be determined using a second model 252c. In some embodiments, second model 252c may be based on any known machine learning method configured to receive values corresponding to the at least one determined first level feature 220 comprising subject profile 224, and/or subject emotion 226, or some combination thereof, as input and to output a value representing an emotional expression of the subject over a period of time. Examples of known machine learning methods include SVM and decision trees. In some embodiments, second model 252c may be a neural network. In some embodiments, second model 252c may be a neural network employed together with other machine learning methods. In some embodiments, second model 252c may be a neural network with an RNN-based architecture, and more preferably a LSTM architecture.

In some embodiments, second model 252a may be trained on a dataset comprising labelled images of clearly visible human faces expressing one or more emotions. In some embodiments, the input dataset used to train second model 252c may be generated by processing an initial dataset with first model 222a, and/or 222b, or some combination thereof, to generate the input dataset comprising values corresponding to subject profile 224, and/or subject emotion 226, or some combination thereof. An example of an initial dataset is the AffectNet dataset available at http://mohammadmahoor.com/affectnet/ which is a database of facial expressions generated by collecting and annotating more than 1 million images from the internet. It is contemplated that any other suitable dataset may be used as the initial dataset.

According to some embodiments of the present disclosure, the at least one second level feature 250 may comprise cognitive load 262 which is the amount of working memory resource used by the subject. Several complex tasks involve a wide range of cognitive skills, multisensory perception, and motor abilities. Cognitive impairment, in its varying degrees, is an important factor that can affect the subject's ability to carry out activities, such as driving a vehicle. In some embodiments, cognitive load 262 may be determined using a second model 252d. In some embodiments, second model 252d may be based on any known machine training method configured to receive values corresponding to the at least one determined first level feature 220 comprising subject profile 224, subject mental fatigue 236, subject distraction 238, and/or subject drowsiness 242, or some combination thereof, as input and to output a value representing a cognitive load of the subject. Examples of known machine learning methods include random forest, gradient boosting and personalised regression. In some embodiments, second model 252d may be a neural network. In some embodiments, second model 252d may be a neural network employed together with other machine learning methods. In some embodiments, second model 252d may be a neural network. In some embodiments, second model 252d may be a neural network with an RNN-based architecture, and more preferably a LSTM architecture.

In some embodiments, second model 252d may be trained on a dataset comprising labelled data with cognitive load defined based on inputs from subject mental fatigue, subject distraction and/or subject drowsiness rated on a predefined scale. In some embodiments, the predefined scale may range from 0 (no cognitive load) to +5 (max cognitive load). In some embodiments, the initial dataset may be generated based on the method disclosed in "Cognitive Load Estimation in the Wild" by Fridman *et. al.* In some embodiments, the input dataset used to train second model 252c may be generated by processing an initial dataset with first model 222a, 222f, 222g, and/or 222h, or some combination thereof, to generate the input dataset comprising values corresponding to subject profile 224, subject mental fatigue 236, subject distraction 238, and/or subject drowsiness 242, or some combination thereof. An example of an initial dataset that may be used is the CLAS (Cognitive Load, Affect and Stress) dataset available at https://ieee-dataport.org/open-access/database-cognitive-load-affect-and-stress-recognition. It is contemplated that any other suitable dataset may be used as the initial dataset.

According to some embodiments of the present disclosure, where the subject is an occupant in a vehicle, the at least one second level feature 250 may comprise subject comfort 264 which is an overall comfort level experienced by the subject. Both thermal comfort and trip comfort interact with each other and affect the overall subject comfort. Thermal comfort is important as the human body is usually relaxed when the environmental temperature is compatible. Similarly, the human mind is also at relative peace when the subject knows that the driving is safe, and the optimal route has been chosen. In some embodiments, subject comfort 264 may be determined using a second model 252e. In some embodiments, second model 252e may be based on any known machine learning method configured to receive values corresponding to the at least one determined first level feature 220 comprising subject profile 224, thermal comfort 244, and/or trip comfort 248, or some combination thereof, as input and to output a value representing a measure of subject comfort. Examples of known machine learning techniques include random forest and gradient boosting. In some embodiments, second model 252e may be a neural network. In some embodiments, second model 252e may be a neural network employed together with other machine learning methods. In some embodiments, second model 252e may be a neural network with an RNN-based architecture, and more preferably a LSTM architecture. In some embodiments, the second model 252e may be trained on a dataset comprising labelled data with subject comfort defined based on inputs from thermal comfort and/or trip comfort rated on a predefined scale. In some embodiments, the predefined scale may range from -5 (most negative or least comfort) to +5 (most positive or highest comfort).

According to some embodiments of the present disclosure, a quantitative evaluation of the subject's experience 270 may be determined based on the at least one second level feature 250. In some embodiments, the quantitative evaluation of the subject's experience 270 may also be determined based on input from subject database 246. The quantitative evaluation may be determined using any known machine learning methods, such as support vector machines, decision trees, random forests, or any other types of models including linear models and/or non-linear models. Preferably, the quantitative evaluation of the subject's experience 270 is determined or is done by using a probabilistic model. Preferably, the probabilistic model is a trained neural network, the trained neural network configured to receive values corresponding to each determined second level feature as input and to output a value on a predefined scale representing the subject's experience. For example, the predefined scale may be a scale from 0 to 5 and the value on the predefined scale may be any value between 0 to 5. The trained neural network is preferably a time-series based neural network, and more preferably has a recurrent neural network (RNN) architecture, and even more preferably has a long short-term memory (LSTM) or gated recurrent unit (GRU) architecture.

Fig. 3 illustrates a method of determining a change in the determined at least one first level feature, in accordance with embodiments of the present disclosure. In some embodiments, the least one first level feature 220 may be determined more than once or in constant time intervals or continuously, and the at least one second level feature 250 may be determined upon detection of a change in the accordingly determined at least one first level feature 220. A change in the determined at least one first level feature 220 may indicate that a significant event that has caused a change in the behaviour of the subject has occurred. Restricting the determination of the at least one second level feature 250 to situations where a change in the determined at least one first level feature 220 has been detected may be advantageous as the restriction ensures that appropriate weight is given to the significant events, and the impact of such significant events is not reduced or diluted due to the consideration of all events. In addition, the restriction may also reduce the overall computation cost. Method 300 for detecting a change in the determined at least one first level feature 220 may commence in step 304 wherein weights are assigned to the at least one first level feature 220 based on predefined rules, which allows the filtering of events which could potentially impact the accuracy of the evaluation as not all first level features may be relevant for all subjects. In some embodiments, the predefined rules may be based on the role of the subject. In particular, where the subject is an occupant in a vehicle, the predefined rules may be based on whether the subject is a passenger or driver of a vehicle. Whether the subject is a passenger or driver of a vehicle is relevant as it affects the contribution or importance of each factor to the overall evaluation of the subject's experience. For example, where a subject is a driver in a vehicle, a higher weight may be assigned to the first level feature of subject drowsiness 242 and subject distraction 238 as compared to the first level feature 220 of subject pose 232.

Table 1, which follows, provides examples of weightages that may be assigned to each first level feature.

**Table 1**

| First level feature | Role of Subject | |
|---|---|---|
| | Passenger | Driver |
| Subject profile | High | High |
| Subject emotion | High | High |
| Object location and label | High | Low |
| Subject pose | High | Low |
| Subject activity | High | High |
| Subject mental fatigue | Low | High |
| Subject distraction | Low | High |
| Subject drowsiness | Low | High |
| Thermal comfort | High | High |
| Trip comfort | High | Low |

According to some embodiments of the present disclosure, first level features 220 assigned a "high" weightage may be assumed to have a weight of value *X*, and features having a "low" weightage may be assumed to have a weight of value *X-N,* wherein *X* and *N* may be predefined values. In some embodiments, *X* and *N* may be any rational number. In some embodiments, *X* and *N* may be any integer.

According to some embodiments of the present disclosure, method 300 may comprise step 308 wherein a cumulative weight is determined based on the weight assigned in step 304 and corresponding values of the determined at least one first level feature 220. In some embodiments, the cumulative weight may be a sum of all weighted first level features 220, wherein the first level features 220 are weighted based on the weight assigned in step 304. In some embodiments, the cumulative weight may be a mean of the weighted first level features 220, wherein the first level features 220 are weighted based on the weight assigned in step 304.

According to some embodiments of the present disclosure, method 300 may comprise step 312 wherein the cumulative weight determined in step 308 is monitored over a period of time. In some embodiments, the period of time may be any appropriate period of time required to measure the subject's overall experience. In some embodiments, where the subject is an occupant in a vehicle, the period of time may be the duration of time between the subject boarding and alighting the vehicle. In some embodiments, where the subject is an occupant in a room, the period of time may be the duration of time between the subject entering and exiting the room. In some embodiments, where the subject is an occupant in a medical device (e.g., a magnetic resonance imaging (MRI) or computerised tomography (CT) machine), the period of time may be the duration of time between the subject entering and exiting the medical device.

According to some embodiments of the present disclosure, method 300 may comprise step 316 wherein a change is detected in the at least one first level feature when the cumulative weight changes beyond a predefined threshold. The predefined threshold may be automatically or manually defined.

The illustrated steps are set out to explain the exemplary embodiments shown, and it should be anticipated that on-going technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments. The terms "comprises", "comprising", "includes" or any other variations thereof, are intended to cover a non-exclusive inclusion, such that a setup, device or method that includes a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or method. It must also be noted that as used herein and in the appended claims, the singular forms "a," "an," and "the" include plural references unless the context clearly dictates otherwise.

A single processor or other unit may fulfil the functions of several items or steps recited in the claims. The mere fact that certain measures are recited in mutually different dependent claims does not indicate that a combination of these measures cannot be used to advantage. A computer program may be stored/distributed on a suitable machine-readable medium such as an optical storage medium or a solid-state medium supplied together with or as part of other hardware, but may also be distributed in other forms, such as via a data carrier signal, the Internet or other wired or wireless telecommunication systems. Any reference signs in the claims should not be construed as limiting the scope of the claims.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the embodiments of the present invention are intended to be illustrative, but not limiting, of the scope of the invention, which is set forth in the following claims.

## Claims

1. A computer-implemented method for evaluating a subject's experience, the method comprising:
receiving at least one sensor data (202) from at least one sensor, the at least one sensor data (202) generated by the at least one sensor;
determining at least one first level feature (220) based on the at least one sensor data (202);
determining at least one second level feature (250) based on the determined at least one first level feature (202); and
determining a quantitative evaluation (270) of the subject's experience based on the determined at least one second level feature (250).

2. The computer-implemented method of claim 1, wherein:
the at least one first level feature (220) is determined based on the at least one sensor data (202) using at least one first model (222), the at least one first model (222) configured to receive at least one sensor data (202) as input and to output a value representing each at least one first level feature (220),
and/or
the at least one first level feature (220) is selected from the group comprising: subject profile (224), subject emotion (226), object location and label (228), subject pose (232), subject activity (234), subject mental fatigue (236), subject distraction (238), subject drowsiness (238), thermal comfort (244), and trip comfort (248).

3. The computer-implemented method of any of the preceding claims, wherein the subject is an occupant of a vehicle and wherein the at least one first level feature (220) comprises trip comfort (248), wherein trip comfort is determined based on at least one sensor data (202) comprising vehicle data (218) and/or environmental data (214), preferably using a first model (222j), the first model (222j) configured to receive at least one sensor data (202) comprising vehicle data (218) and/or environmental data (214) as input and to output a value representing trip comfort (248), wherein the first model is more preferably is a neural network with a recurrent neural network (RNN) architecture and even more preferably has a long short-term memory (LSTM) or gated recurrent unit (GRU) architecture.

4. The computer-implemented method of any of the preceding claims, wherein the at least one first level feature (220) is determined more than once or in constant time intervals or continuously and wherein the at least one second level feature (250) is determined upon detection of a change in the accordingly determined at least one first level feature (220), wherein detecting a change in the determined at least one first level feature (220) preferably comprises:
assigning a weight to each of the determined at least one first level feature (220) based on predefined rules, wherein the predefined rules are more preferably based on whether the subject is a passenger or a driver of a vehicle;
determining a cumulative weight based on the assigned weight and corresponding value of the determined at least one first level feature (220);
monitoring the cumulative weight over a period of time; and
detecting a change in the determined at least one first level feature (220) when the cumulative weight changes beyond a predefined threshold.

5. The computer-implemented method of any of the preceding claims, wherein:
the at least one second level feature (250) is determined based on the at least one first level feature (220) using at least one second model (252), the at least one second model (252) configured to receive values corresponding to each determined at least one first level feature (220) and to output a value representing each at least one second level feature (250),
and/or
the at least one second level feature (250) is selected from the group comprising: a social trait (254), subject interaction (264), generic emotion (258), cognitive load (262), and subject comfort (264).

6. The computer-implemented method of any of the preceding claims, wherein the at least one second level feature (250) comprises a social trait (254), wherein social trait (254) is determined based on the at least one determined first level feature (220) comprising subject profile (224), subject emotion (226), subject pose (232) and/or subject activity (234), preferably using a second model (252a), the second model (252a) configured to receive values corresponding to the at least one determined first level feature (220) comprising subject profile (224), subject emotion 226, subject pose (232) and/or subject activity (234) as input and to output a value representing a social trait, wherein the second model (252a) is more preferably a neural network, and even more preferably a multi-level fully-connected neural network (FCN).

7. The computer-implemented method of any of the preceding claims, wherein the at least one second level feature (250) comprises subject interaction (264), wherein subject interaction is determined based on the at least one determined first level feature (220) comprising subject profile (224), subject emotion (226), subject pose (232) and/or subject activity (234), preferably using a second model (252b), the second model (252b) configured to receive values corresponding to the at least one determined first level feature (220) comprising subject profile (224), subject emotion (226), subject pose (232) and/or subject activity (234) as input and to output a value representing a quality of interaction of the subject with objects and/or other subjects, wherein the second model (252b) is more preferably a neural network with a recurrent neural network (RNN) architecture, and even more preferably has a long short-term memory (LSTM) architecture.

8. The computer-implemented method of any of the preceding claims, wherein the at least one second level feature (250) comprises generic emotion (258), wherein generic emotion is determined based on the at least one determined first level feature (220) comprising subject profile (224) and/or subject emotion (226), preferably using a second model (252c), the second model (252c) configured to receive values corresponding to the at least one determined first level feature (220) comprising subject profile (224) and/or subject emotion (226) as input and to output a value representing an emotional expression of the subject over a period of time, wherein the second model (252c) is more preferably a neural network with a recurrent neural network (RNN) architecture, and even more preferably has a long short-term memory (LSTM) architecture.

9. The computer-implemented method of any of the preceding claims, wherein the at least one second level feature (250) comprises cognitive load (262), wherein cognitive load is determined based on the at least one determined first level feature (220) comprising subject profile (224), subject mental fatigue (236), subject distraction (238) and/or subject drowsiness (242), preferably using a second model (252d), the second model (252d) configured to receive values corresponding to the at least one determined first level feature (220) comprising subject profile (224), subject mental fatigue (236), subject distraction (238) and/or subject drowsiness (242) as input and to output a value representing a cognitive load of the subject, wherein the second model (252d) is more preferably a neural network with a recurrent neural network (RNN) architecture, and even more preferably has a long short-term memory (LSTM) architecture.

10. The computer-implemented method of any of the preceding claims, wherein the at least one second level feature (250) comprises subject comfort (264), wherein subject comfort is determined based on the at least one determined first level feature (220) comprising subject profile (224), thermal comfort (244), and/or trip comfort (248), preferably using a second model (252e), the second model (252e) configured to receive values corresponding to the at least one determined first level feature (220) comprising subject profile (224), thermal comfort (244), and/or trip comfort (248) as input and to output a value representing a measure of subject comfort.

11. The computer-implemented method of any of the preceding claims, wherein determining a quantitative evaluation of the subject's experience based on the determined at least one second level feature (250) comprises or is done by:
using a probabilistic model to determine a value on a predefined scale representing the subject's experience, wherein the probabilistic model is preferably a trained neural network, the trained neural network configured to receive values corresponding to each determined second level feature (250) and, optionally, an output from a subject database (246), as input and to output a value on a predefined scale representing the subject's experience, wherein the trained neural network is preferably a time-series based neural network, and more preferably has a recurrent neural network (RNN) architecture, and even more preferably has a long short-term memory (LSTM) or gated recurrent unit (GRU) architecture.

12. The computer-implemented method of any of the preceding claims, further comprising:
calculating an overall rating of the subject's experience based on the determined quantitative evaluations recorded over a period of time, preferably using a score estimation algorithm, and more preferably a time-series based neural network; and
optionally, receiving a subject rating from the subject or from a second subject; and
optionally, validating the subject rating if a margin between the overall rating and the subject rating is lower than a predefined threshold, and/or sending a notification to a third party if a margin between the overall rating and the subject rating is higher than a predefined threshold.

13. The computer-implemented method of any of the preceding claims, further comprising generating one or more alerts based on the determined second level feature (250) and/or the generated quantitative evaluation (270) and/or the calculated overall rating.

14. A system comprising one or more sensors, one or more processors and a memory that stores executable instructions for execution by the one or more processors, the executable instructions comprising instructions for performing a computer-implemented method according to any of the preceding claims, wherein the system is preferablysuitable for implementation into a vehicle cabin and/or comprises a vehicle.

15. A computer program, a machine-readable storage medium, or a data carrier signal that comprises instructions, that upon execution on a data processing device and/or control unit, cause the data processing device and/or control unit to perform the steps of a computer-implemented method according to any of the preceding claims 1 to 13.
